# FASCICULE DE BREVET EUROPEEN

(11) **EP 1 802 526 B1**
(45) Date de publication et mention de la délivrance du brevet: **13.04.2016**
(21) Numéro de dépôt: 05800486.2
(22) Date de dépôt: 15.09.2005
(51) Int. Cl.: B64C 25/24, B64C 25/30, B64F 5/00

(54) **SYSTEME DE MANOEUVRE D'UN TRAIN D'ATTERRISSAGE POUR AERONEF**
SYSTEM ZUM MANÖVRIEREN EINES FLUGZEUGFAHRWERKS
SYSTEM FOR MANEUVERING AN AIRCRAFT LANDING GEAR

(30) Priorité: 21.09.2004 FR 0452105
(43) Date de publication de la demande: 04.07.2007
(73) Titulaire: AIRBUS OPERATIONS (S.A.S), 31060 Toulouse (FR)
(72) Inventeur: REYNES, Didier, F-31200 TOULOUSE (FR)
(74) Mandataire: Gicquel, Olivier Yves Gérard
(86) Numéro de dépôt international: PCT/FR2005/050746
(87) Numéro de publication internationale: WO 2006/032811

(56) Documents cités:
- FR-A- 2 677 950
- US-A- 4 573 649
- US-A- 5 484 120
- PATENT ABSTRACTS OF JAPAN vol. 1995, no. 09, 31 octobre 1995 (1995-10-31) & JP 07 156889 A (HONDA MOTOR CO LTD), 20 juin 1995 (1995-06-20)

## Description

### Domaine de l'invention

L'invention concerne un système de manoeuvre du train d'atterrissage d'un aéronef. On appelle système de manoeuvre du train d'atterrissage, un système permettant de sortir et de rentrer un train d'atterrissage hors du fuselage d'un aéronef. En effet, dans de nombreux aéronefs, le train d'atterrissage est escamotable, c'est-à-dire qu'il est monté de façon articulée dans une case de train située à l'intérieur du fuselage de l'aéronef. Ainsi, en phase de croisière, le train d'atterrissage reste à l'intérieur du fuselage, dans la case de train fermée par un ensemble de trappes. Avant la phase d'atterrissage de l'aéronef le train d'atterrissage est sorti de la case train, après ouverture des trappes. L'invention concerne le système de commande de l'ouverture des trappes et de la sortie du train d'atterrissage, en fonctionnement normal, en fonctionnement de secours et en phase de maintenance.

L'invention trouve des applications dans le domaine de l'aéronautique et, en particulier, dans le domaine de la sortie et/ou de la rentrée du train d'atterrissage.

### Etat de la technique

Actuellement, la plupart des aéronefs comportent un ou plusieurs train(s) d'atterrissage escamotable(s). Chaque train d'atterrissage, appelé simplement train, est monté dans un logement du fuselage, appelé «case de train ». En phase de croisière, la case de train est fermée par un ensemble de trappes afin de conserver le profil aérodynamique de l'aéronef. En phase d'atterrissage et de décollage, le train est sorti, c'est-à-dire qu'il est hors de son logement, dans une position dite basse. Avant la phase d'atterrissage de l'aéronef, le train sort de son logement, c'est-à-dire qu'il passe d'une position escamotée à une position basse, normalement, de façon automatique, sur demande du pilote.

Un système de manoeuvre d'un train d'atterrissage est connu de US 4573649, qui montre toutes les caractéristiques du prémbule de la revendication 1.

En effet, en fonctionnement dit «normal », le train d'atterrissage sort de façon automatique de la case de train. En cas de défaillance du système, un système de secours assure une sortie mécanique du train d'atterrissage.

En fonctionnement normal, le train d'atterrissage ne peut être sorti qu'une fois les trappes de la case de train ouvertes. Une séquence de fonctionnement du système de sortie du train est donc prévue, dans laquelle les trappes sont tout d'abord ouvertes puis le train d'atterrissage est descendu. Une séquence de fonctionnement inverse permet de rentrer le train dans la case de train après décollage de l'aéronef.

En fonctionnement de secours, le train d'atterrissage sort de la case de train, par gravité, entraînant l'ouverture des trappes. Les trappes de la case de train comprennent une ou plusieurs trappe(s) principale(s) et une ou plusieurs trappe(s) secondaire(s), indépendante(s) de la (ou des) trappe(s) principale(s). La trappe principale est destinée à être refermée dès que le train est en position basse. Les trappes secondaires sont destinées à laisser passer la jambe du train ; elles restent donc ouvertes tant que le train est sorti.

Lorsque l'aéronef est au sol, la trappe principale de la case de train est fermée, les trappes secondaires restant ouvertes pour ne laisser qu'un espace minimum pour la jambe du train. Il peut toutefois être nécessaire d'ouvrir la trappe principale, pour des besoins de maintenance.

Actuellement, le système de sortie du train est un système mixte, c'est-à-dire qu'il utilise plusieurs sources d'énergie. Plus précisément, en fonctionnement normal, le système utilise une énergie hydraulique associée à une énergie électrique. En fonctionnement de secours, le système utilise une énergie électrique associée à une chaîne cinématique mécanique. En fonctionnement de maintenance, le système utilise une énergie humaine associée à une énergie mécanique.

Pour un fonctionnement normal, le système comporte les éléments suivants :
- une vanne commandée électriquement, ou électrovanne qui assure la connexion du circuit hydraulique spécifique à la case train avec le circuit hydraulique général de l'aéronef. Cette électrovanne est commandée depuis le poste de pilotage ; elle assure la mise en fonctionnement du circuit hydraulique de la case train.
- une chaîne de commande hydraulique et électrique de trappe. Celle-ci comporte :
   - au moins un crochet de verrouillage de la trappe qui assure le maintien en position fermée de la trappe,
   - au moins un vérin de trappe qui assure la mobilité de la trappe, et
   - une électrovanne de trappe qui commande le vérin de trappe.

Actuellement, la chaîne de commande hydraulique et électrique de trappe est un circuit hydraulique, appelé circuit de trappe. La vanne de trappe constitue le point d'entrée de cette chaîne de commande. Elle est commandée électriquement. Lorsque la vanne est ouverte, un fluide s'écoule dans l'ensemble de la chaîne de commande, assurant le déverrouillage du crochet de trappe et l'alimentation du vérin de trappe, ce qui assure l'ouverture de la trappe.

Le système comporte de plus une chaîne de commande du train qui comporte :
- au moins un crochet de maintien du train qui assure le maintien du train en position escamotée,
- au moins un vérin de train qui assure la mobilité du train, et
- une électrovanne de train qui commande le vérin de train.

Actuellement, la chaîne de commande du train est un circuit hydraulique, appelé circuit de train. La vanne de train constitue le point d'entrée de cette chaîne de commande. Elle est commandée électriquement. Lorsque la vanne est ouverte, un fluide s'écoule dans l'ensemble de la chaîne de commande, assurant le déverrouillage du crochet de maintien du train et l'alimentation du vérin de train, ce qui assure la sortie du train.

Lorsque le train est en position basse, l'alimentation du train est coupée. Le vérin de trappe est alors actionné pour fermer la trappe principale, les trappes secondaires restant ouvertes pour ne laisser alors qu'un espace minimum pour le passage de la jambe du train. Une fois la trappe principale fermée, l'alimentation du vérin de trappe est coupée pour éviter une ouverture intempestive de ladite trappe. Les circuits hydrauliques spécifiques à la case train sont ensuite déconnectés du circuit hydraulique général.

L'ouverture de la trappe puis la sortie du train sont obtenues au moyen d'un circuit hydraulique séquentiellement commandé par un calculateur électrique. Ainsi, le fait d'avoir une électrovanne pour les trappes et une autre électrovanne pour le train permet d'ouvrir ces vannes à des instants différents, plus ou moins espacés dans le temps, ce qui permet d'obtenir un séquencement dans l'ouverture des trappes et la sortie du train.

Le séquencement de remontée du train dans la case train est inversé par rapport au séquencement de sortie du train. Il comporte les même étapes que pour la sortie du train, commandée électriquement et hydrauliquement, mais réalisées dans l'ordre inverse.

Ainsi, en fonctionnement normal, la vanne de commande générale et les vannes du circuit hydraulique train et trappe sont commandées électriquement depuis le poste de pilotage, par exemple, par l'ordinateur de bord des trains de l'aéronef, suite à la commande du pilote.

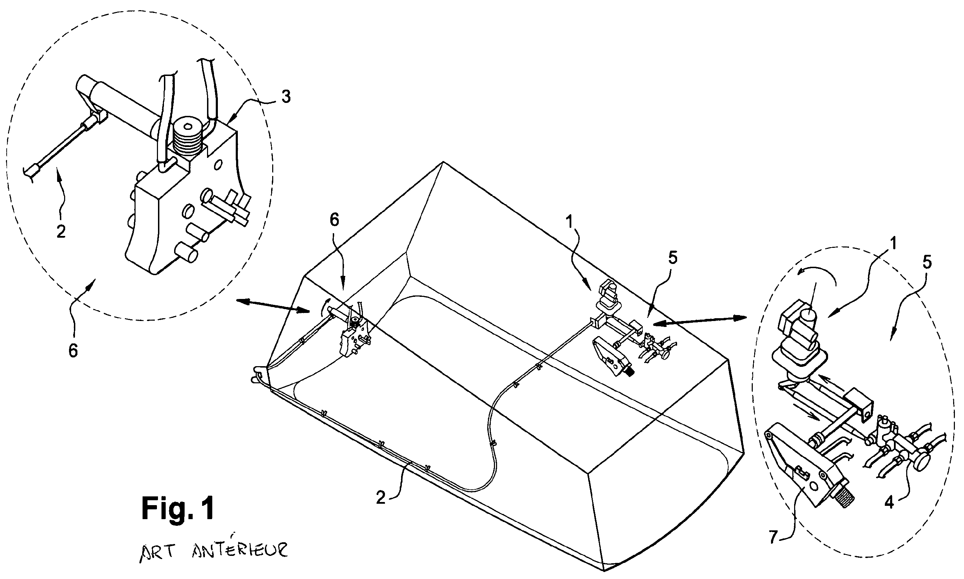

En cas de défaillance du circuit hydraulique général ou du circuit hydraulique spécifique à la case train, un fonctionnement de secours est prévu. Ce fonctionnement de secours (appelé Free Fall, en termes anglosaxons) est obtenu au moyen d'un système spécifique représenté sur la figure 1. Elle montre le système de secours installé dans la case train.

La figure 1 montre schématiquement une case train dans laquelle est monté un système de secours classique. Ce système comporte un actionneur 1 commandé électriquement, par exemple par le calculateur des trains. Cet actionneur 1 est relié mécaniquement par une chaîne cinématique 2 (appelée aussi tringlerie) au crochet de trappe 3, au crochet de train 7 et à une vanne 4. Sur cette figure, on a représenté une vue plus détaillée de la chaîne de commande de trappe 6 avec son crochet de verrouillage 3 et de la chaîne de commande du train 5 avec son crochet de maintien 7. La vanne 4 permet le libre coulissement des pistons dans les vérins de trappes et de train.

Dans ce fonctionnement de secours, le séquencement des opérations de déverrouillage des crochets trappes et train est assuré mécaniquement par la mise en oeuvre de l'actionneur 1.

On comprendra, bien entendu, que dans ce mode de fonctionnement de secours, les trappes restent ouvertes et le train d'atterrissage ne peut pas être rentré.

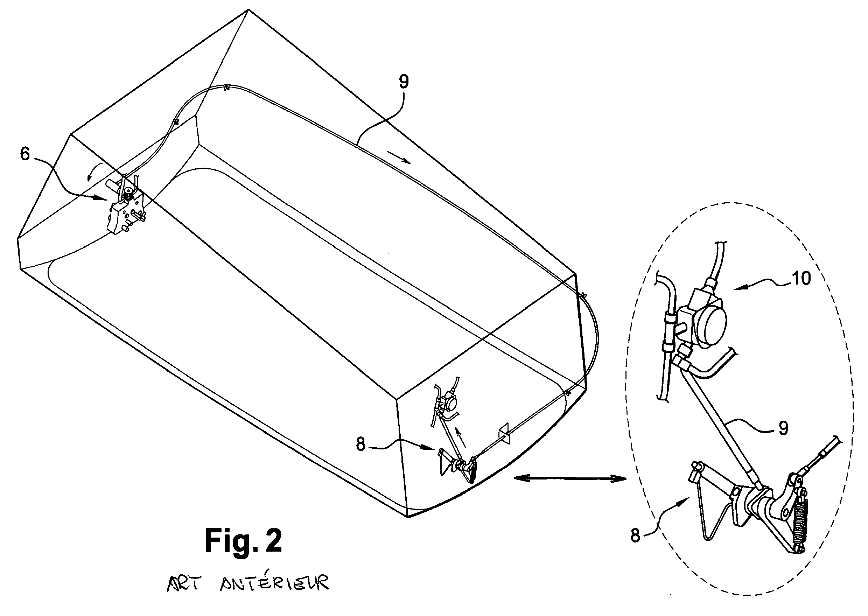

Dans un autre mode de fonctionnement du système de sortie du train, en particulier lorsque l'aéronef est au sol, il est important, pour des raisons de maintenance, de pouvoir ouvrir la trappe principale de la case de train, manuellement. En effet, lorsque l'aéronef est au sol et qu'il repose sur son train d'atterrissage, cette trappe est fermée. Le personnel de maintenance doit pouvoir pénétrer dans la case train pour effectuer des inspections. Au sol, l'énergie hydraulique n'est pas disponible car les moteurs sont éteints. L'ouverture de la trappe se fait alors mécaniquement au moyen d'une poignée mécanique située à proximité de la trappe. Un exemple d'un tel système de maintenance classique est représenté sur la figure 2. Elle représente schématiquement le système de maintenance tel que fixé dans la case de train.

Le système de maintenance comporte une poignée mécanique 8, reliée par une chaîne cinématique 9 (appelée aussi tringlerie) à la chaîne de commande de trappes 6. La chaîne cinématique 9 peut être une commande à billes fixée par des guides sur les parois de la case train. En actionnant la poignée 8, la chaîne cinématique 9 est entraînée en mouvement, commandant l'ouverture de la trappe principale. Plus précisément, en tournant la poignée 8, par exemple d'un angle de 90°, la chaîne cinématique 9 est entraînée dans un mouvement linéaire qui réalise le séquencement suivant :
- isolation du circuit hydraulique spécifique d'alimentation des vérins de trappe (dans un souci de sécurité, pour éviter qu'une connexion accidentelle au circuit hydraulique général n'entraîne une fermeture intempestive de la trappe principale) ;
- ouverture de la vanne 10 permettant la libre circulation du fluide dans la chambre du vérin de trappe, afin que le vérin ne s'oppose pas à l'ouverture de ladite trappe ;
- déverrouillage mécanique du crochet trappe principale.

La trappe principale s'ouvre alors par gravité ou manuellement.

Dans le système de maintenance, la poignée manuelle est fixée sur le fuselage de l'aéronef, généralement dans une cavité fermée, réalisée à proximité de la trappe, ce qui a pour conséquence qu'elle est placée à une hauteur relativement importante par rapport au sol. De ce fait, le personnel de maintenance doit, dans certains cas, monter sur une échelle pour pouvoir attraper cette poignée et l'actionner afin d'ouvrir la trappe.

En outre, comme on vient de l'expliquer, l'architecture de commande de sortie et de rentrée du train d'atterrissage est complexe et nécessite un nombre important d'éléments encombrants, comme les chaînes cinématiques qui sont différentes selon le mode de fonctionnement.

De plus, afin de pouvoir être utilisés dans les différents modes de fonctionnement, certains éléments sont commandables par différentes sources d'énergie, ce qui les complexifie. Par exemple, le crochet de train comporte 2 entrées indépendantes : une entrée hydraulique pour le fonctionnement normal et une entrée mécanique pour le fonctionnement de secours. De même, le crochet de trappe comporte 3 entrées séparées et indépendantes : une entrée hydraulique en fonctionnement normal, une entrée mécanique en mode secours et une entrée mécanique particulière pour la maintenance. Il s'ensuit un encombrement conséquent des interfaces avec les chaînes de commande.

En outre, les crochets de trappe et de train sont situés dans des compartiments non pressurisés alors que les chaînes de commande se situent principalement dans des compartiments pressurisés. De ce fait, toutes sortes de précautions doivent être prises pour permettre à cette tringlerie de traverser les parois des compartiments pressurisés sans affecter la pression dans ces compartiments.

Actuellement, les fabricants d'aéronefs cherchent à concevoir des aéronefs permettant de transporter, en un seul vol, un chargement de plus en plus volumineux et lourd. Pour cela, ils cherchent à concevoir des aéronefs de taille de plus en plus grande. De tels aéronefs peuvent avoir un nombre de trains d'atterrissage plus élevé que des aéronefs classiques, ce qui multiplie les problèmes énoncés précédemment pour un train d'atterrissage. De plus, cette augmentation du nombre de trains augmente considérablement la masse de l'aéronef.

En outre, dans ces aéronefs de très grande taille, les roues des trains d'atterrissage peuvent être plus volumineuses que des roues de trains classiques, ce qui place le fuselage plus haut par rapport au sol. Pour des raisons de masse et de mise en place, la poignée devrait être placée dans une zone non pressurisée, ce qui nécessite le percement d'un orifice pour le passage de la tringlerie dans une paroi pressurisée avec tous les problèmes liés à la pressurisation que cela entraîne. Cette poignée se trouverait alors très loin du sol, à une hauteur supérieure a une hauteur d'homme, avec des risques de chute accrus pour les hommes de la maintenance.

### Exposé de l'invention

L'invention a justement pour but de remédier aux inconvénients des techniques exposées précédemment. A cette fin, l'invention propose un système de manoeuvre du train d'atterrissage d'un aéronef dans lequel la commande d'ouverture de la trappe et la commande de sortie du train sont réalisées électriquement, quel que soit le mode de fonctionnement. En effet, l'énergie électrique est toujours disponible à bord d'un aéronef, soit grâce au fonctionnement des réacteurs, en fonctionnement normal ou en cas de perte de l'énergie hydraulique, soit grâce a une hélice de secours permettant de générer la quantité d'électricité suffisante pour manoeuvrer l'avion, en mode dégradé (perte des énergies hydraulique et électrique), soit en utilisant éventuellement une source auxiliaire d'énergie au sol (batteries, groupe de parc, ... ), en phase de maintenance. L'invention propose donc de remplacer les commandes hydrauliques et mécaniques des chaines de commandes des trappes et du train par des commandes électriques, en fonctionnement normal, en fonctionnement de secours et en fonctionnement de maintenance.

Plus précisément l'invention concerne un système de manoeuvre d'un train d'atterrissage d'un aéronef selon la revendication 1.

L'invention peut comporter également une ou plusieurs des caractéristiques suivantes :
- la chaîne de commande des trappes comporte au moins un dispositif de verrouillage de la trappe commandé électriquement, au moins un organe d'actionnement de la trappe et un organe de commande de l'organe d'actionnement commandé électriquement.

- la chaîne de commande du train comporte au moins un dispositif de maintien du train commandé électriquement, au moins un organe d'actionnement du train et un organe de commande de l'organe d'actionnement commandé électriquement.
- en fonctionnement normal, la source d'énergie est l'alimentation électrique générale disponible de l'aéronef.
- en fonctionnement de secours, la source d'énergie est l'alimentation électrique générale de l'aéronef ou une source électrique secondaire de l'aéronef, comportant une hélice si l'alimentation électrique générale de l'aéronef n'est pas disponible.
- en phase de maintenance, la source d'énergie est une source électrique disponible de l'aéronef ou une source électrique auxiliaire au sol.
- la chaîne de commande des trappes comporte au moins un actionneur électrique associé au dispositif de verrouillage de la trappe et un actionneur électrique associé à l'organe de commande de l'organe d'actionnement de la trappe.
- la chaîne de commande du train comporte au moins un actionneur électrique associé au dispositif de maintien du train et un actionneur électrique associé à l'organe de commande de l'organe d'actionnement du train.
- la chaîne de commande des trappes comporte un organe de commande électrique commandant l'ouverture de la trappe principale, en phase de maintenance.
- l'unité de commande générale est reliée électriquement à la chaîne de commande de trappes et à la chaîne de commande du train.
- la liaison électrique entre l'unité de commande générale et les chaînes de commande des trappes et du train est une liaison filaire.
- l'unité de commande générale assure un séquencement dans les actionnements des dispositif de verrouillage de trappes et de maintien du train et dans les organes d'actionnement

L'invention concerne également un aéronef muni de ce système de manoeuvre du train d'atterrissage.

### Brève description des dessins

- La figure 1, déjà décrite, représente le système de sortie de train d'atterrissage, en fonctionnement de secours, de l'art antérieur.
- La figure 2, déjà décrite, représente le système de sortie de train d'atterrissage, en phase de maintenance, de l'art antérieur.
- La figure 3 représente le système de sortie de train d'atterrissage selon l'invention.

### Description détaillée de modes de réalisation de l'invention

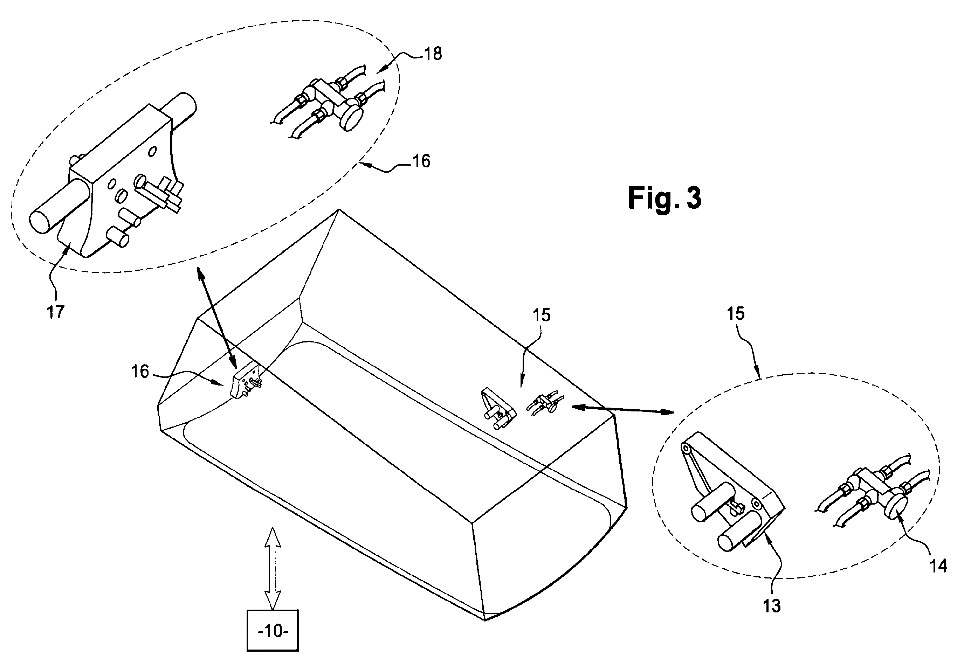

L'invention propose un système de manoeuvre du train d'atterrissage à commandes électriques. Ce système de l'invention est représenté sur la figure 3.

Ce système de manoeuvre comporte une chaîne de commande des trappes 16 et une chaîne de commande du train 15, ces chaînes étant elles-mêmes commandées par une unité de commande générale.

Dans l'invention, la chaîne de commande des trappes 16 comporte au moins un dispositif de verrouillage de chaque trappe, au moins un organe d'actionnement de chaque trappe et un organe de commande de cet organe d'actionnement. Comme expliqué précédemment, la case train d'un aéronef comporte plusieurs trappes, à savoir une ou plusieurs trappe(s) principale(s) et au moins une trappe secondaire. L'invention va être décrite dans son application à une trappe train principale. Il est à noter qu'elle peut aussi s'appliquer à toutes les trappes principales d'un aéronef (dans le cas où l'aéronef a plusieurs trappes principales) et à une ou à plusieurs trappes secondaires de l'aéronef, étant entendu que, dans ce cas, la (ou les) trappe(s) secondaire(s) reste(nt) ouverte(s) tant que le train est sorti.

Chaque trappe est actionnée au moyen d'au moins un organe d'actionnement, tel qu'un vérin ou un moteur électrique. Dans la suite de la description, on considérera que l'organe d'actionnement est un vérin. Les vérins sont commandés au moyen d'un organe de commande 18. Cet organe de commande peut être une électrovanne, c'est-à-dire une vanne hydraulique commandée électriquement par un moteur électrique.

Chaque trappe est maintenue en position verrouillée au moyen d'un dispositif de verrouillage 17. Ce dispositif de verrouillage peut être un crochet ou bien un vérin auto-bloquant ou encore un système de bielles reliées au train et permettant, par une cinématique appropriée, d'ouvrir la trappe lorsque le train débute sa phase de sortie. Dans la suite de la description, on considérera que le dispositif de verrouillage est un crochet commandé électriquement. Le crochet de verrouillage est donc, dans l'invention, associée à un actionneur électrique.

En d'autres termes, dans le mode de réalisation préféré de l'invention, la chaîne de commande de trappe comporte :
- un crochet de verrouillage commandé électriquement à partir d'un actionneur électrique, et
- un vérin de trappe commandé hydrauliquement par une électrovanne.

Dans l'invention, la chaîne de commande du train 15 comporte un dispositif de maintien du train, au moins un organe d'actionnement du train et un organe de commande de cet organe d'actionnement. Le train est donc actionné au moyen d'un organe d'actionnement, tel qu'un vérin ou un moteur électrique. Par la suite, on considérera que l'organe d'actionnement est un vérin. Ce vérin est commandé au moyen d'un organe de commande 14 du type électrovanne.

En position rentrée, le train est maintenu par un dispositif de maintien 13 qui peut être un crochet ou un vérin auto-bloquant. On considérera, dans la suite de la description, que le dispositif de maintien est un crochet commandé électriquement. Dans l'invention, le crochet de maintien est associé à un actionneur électrique.

Ainsi, dans de mode de réalisation préféré de l'invention, la chaîne de commande du train comporte :
- un crochet de maintien du train commandé électriquement à partir d'un actionneur électrique, et
- un vérin de train commandé hydrauliquement par une électrovanne.

La chaîne de commande du train, comme la chaîne de commande des trappes, sont commandées de façon électrique à partir d'une unité de commande générale, située, par exemple, dans le poste de pilotage. Les différents éléments de ces chaînes de commande train et trappe, c'est-à-dire les vérins et crochets, ont ensuite un fonctionnement classique, c'est-à-dire hydraulique et/ou mécanique. Selon l'invention, la commande de ces éléments est entièrement électrique. Autrement dit, chaque élément de la chaîne de commande train et de la chaîne de commande trappe est apte à recevoir un ordre de commande électrique émis par l'unité de commande générale. Pour cela, chaque élément est connecté à un actionneur électrique, à savoir un moteur électrique ou une électrovanne.

En vol, le courant électrique à bord d'un aéronef est fourni par exemple par les réacteurs de l'aéronef. Ainsi, dans l'invention, en fonctionnement normal, le courant électrique nécessaire à la manoeuvre du train et, par conséquent, des trappes, peut être fourni par les réacteurs de l'aéronef, comme toute l'énergie électrique à bord.

En cas de défaillance du système hydraulique normal sur l'aéronef, un mode dégradé est mis en place, appelé fonctionnement de secours. Dans ce mode dégradé, l'énergie électrique nécessaire à la manoeuvre du train et des trappes est fournie par une source d'énergie électrique disponible de l'aéronef.

Au sol, en phase de maintenance, l'énergie électrique peut être fournie par une source d'énergie auxiliaire. Cette source d'énergie auxiliaire peut être, par exemple, les batteries de l'aéronef ou un groupe électrogène au sol.

On comprend donc que, dans l'invention, un seul système de manoeuvre du train et des trappes peut être mis en oeuvre aussi bien en fonctionnement normal, qu'en fonctionnement de secours ou en phase de maintenance. Dans l'invention, quel que soit le mode de fonctionnement (normal, secours, maintenance), la seule source d'énergie des chaînes de commande des trappes et du train est l'énergie électrique. Il n'y a donc plus de chaîne mécanique ou hydraulique spécifique à chaque mode de fonctionnement. Dans l'invention, la chaîne de commande des trappes et la chaîne de commande du train sont reliées chacune uniquement par une liaison électrique à l'unité de commande générale. Cette liaison électrique peut être un câble électrique ou bien même une liaison sans fil.

On comprend aisément que le passage d'un câble électrique à l'intérieur de la case de train est plus simple à mettre en place que l'installation d'une tringlerie, plus volumineuse, moins flexible et plus difficile à installer, qui, de plus, induit des efforts aux points de fixation.

La manoeuvre du train et des trappes est donc commandée, en vol, par l'équipage, à partir de l'ordinateur de bord, depuis le poste de pilotage, par actionnement d'un interrupteur, d'une manette reliée à un capteur de position électrique ou de tout autre organe de commande électrique. Cet organe de commande électrique transmet l'ordre de commande d'ouverture des trappes et de sortie du train selon une séquence prédéterminée qui assure l'ouverture des trappes avant la sortie du train puis la fermeture de la trappe principale une fois le train sorti. A l'inverse, lors de la rentrée du train, cette séquence prédéterminée assure l'ouverture de la trappe principale avant la remontée du train puis la fermeture des trappes principale et secondaires une fois le train rentré. La succession des manoeuvres ouverture/fermeture trappes et sortie/rentrée train est obtenue au moyen du séquencement des ordres de commande envoyés par l'unité de commande générale.

En phase de maintenance, l'ouverture de la trappe principale peut être commandée par un organe de commande électrique 10, placé de manière à être facilement accessible. Cet organe de commande électrique 10, du type interrupteur ou levier de commande, commande l'ouverture de la trappe principale de la case train. Cet interrupteur peut se présenter sous la forme d'un bouton électrique connecté, par un câble électrique, à la chaîne de commande des trappes 16. Sur la figure 3, la connexion entre l'interrupteur 10 et la chaîne de commande des trappes 16 est symbolisée par une double flèche. Un tel interrupteur électrique a l'avantage de pouvoir être placé à portée d'homme. En effet, cet interrupteur électrique étant peu volumineux, par rapport à une poignée manuelle, il peut être installé directement sur le fuselage, voir même sur le train d'atterrissage. Il ne risque pas de modifier la portance de l'aéronef et, par conséquent, peut être installé ailleurs que dans une cavité fermée. Il peut, par exemple, être installé sur une jambe du train d'atterrissage.

Le système de l'invention permet donc un gain de masse mais également un gain de place puisqu'il n'y a pas d'arbre, de bielle ou autre tringlerie mécanique traversant le logement du train d'atterrissage.

## Revendications

1. Système de manoeuvre d'un train d'atterrissage d'un aéronef monté articulé dans une case de train fermée par un ensemble 5 de trappes, comportant :
- une unité de commande générale de la case de train pour déclencher les différentes manoeuvres,
- une chaîne de commande des trappes (16), comportant au moins un dispositif de verrouillage de la trappe (17), au moins un organe d'actionnement de la trappe et un organe de commande (18) de l'organe d'actionnemens,
- une chaîne de commande du train d'atterrissage (15), comportant au moins un dispositif de maintien du train (13), au moins un organe d'actionnement du train et un organe de commande (14) de l'organe d'actionnement,
**caractérisé en ce que** l'unité de commande générale, la chaîne de commande de trappes et la chaîne de commande du train sont commandées par une source d'énergie électrique, lorsque l'aéronef est en fonctionnement normal, en fonctionnement de secours et en phase de maintenance,
ledit ou lesdits dispositifs de verrouillage de trappe, ledit ou lesdits organe de commande (18) de l'organe d'actionnement de trappe, ledit ou lesdits dispositifs de maintien du train (13) et ledit ou lesdits organes de commande (14) de l'organe d'actionnement de train étant commandés éléctriquement,
ledit dispositif de verrouillage de la trappe étant constitué par un crochet de verrouillage commandé électriquement à partir d'un actionneur électrique,
ledit dispositif de maintien du train est constitué par un crochet de maintien du train commandé électriquement à partir d'un actionneur électrique,
la chaîne de commande des trappes et la chaîne de commande du train d'atterrissage étant reliées chacune à l'unité de commande générale uniquement par une liaison électrique et étant aptes à recevoir des ordres de commande envoyés par l'unité de commande générale suivant un séquencement prédéterminé.

2. Système selon la revendication 1, **caractérisé en ce que**, en fonctionnement normal, la source d'énergie est l'alimentation électrique générale de l'aéronef.

3. Système selon l'une quelconque des revendications 1 à 2, **caractérisé en ce que**, en fonctionnement de secours, la source d'énergie est l'alimentation électrique générale de l'aéronef ou une source électrique secondaire de l'aéronef, comportant une hélice.

4. Système selon l'une quelconque des revendications 1 à 3, **caractérisé en ce que**, en phase de maintenance, la source d'énergie est une source électrique auxiliaire, au sol.

5. Système selon l'une quelconque des revendications 1 à 4, **caractérisé en ce que** la chaîne de commande des trappes comporte au moins un actionneur électrique associé au dispositif de verrouillage de la trappe et un actionneur électrique associé à l'organe de commande de l'organe d'actionnement de la trappe.

6. Système selon l'une quelconque des revendications 1 à 5, **caractérisé en ce que** la chaîne de commande du train comporte au moins un actionneur électrique associé au dispositif de maintien du train et un actionneur électrique associé à l'organe de commande de l'organe d'actionnement du train.

7. Système selon l'une quelconque des revendications 1 à 6, **caractérisé en ce que** la chaîne de commande des trappes comporte un organe de commande électrique (10) placé en extérieur de l'aéronef, commandant l'ouverture de la trappe principale, en phase de maintenance.

8. Système selon l'une quelconque des revendications 1 à 7, **caractérisé en ce que** la liaison électrique entre l'unité de commande générale et les chaînes de commande des trappes et du train est une liaison filaire.

9. Système selon l'une quelconque des revendications 1 à 8, **caractérisé en ce que** l'unité de commande générale assure un séquencement dans les actionnements des dispositifs de verrouillage des trappes et de maintien du train et dans les organes d'actionnement.

10. Aéronef comportant un train d'atterrissage escamotable, **caractérisé en ce qu'**il comporte un système de manoeuvre du train d'atterrissage selon l'une quelconque des revendications précédentes.

## Patentansprüche

1. System zum Manövrieren eines Fahrwerks eines Luftfahrzeugs, das gelenkig in einen Fahrwerkkasten montiert ist, der von einer Einheit 5 von Klappen verschlossen wird, das aufweist:
- eine allgemeine Steuereinheit des Fahrwerkkastens, um die verschiedenen Manöver auszulösen,
- eine Steuerkette der Klappen (16), die mindestens eine Verriegelungsvorrichtung der Klappe (17), mindestens ein Betätigungsorgan der Klappe und ein Steuerorgan (18) des Betätigungsorgans aufweist,
- eine Steuerkette des Fahrwerks (15), die mindestens eine Haltevorrichtung des Fahrwerks (13), mindestens ein Betätigungsorgan des Fahrwerks und ein Steuerorgan (14) des Betätigungsorgans aufweist,
**dadurch gekennzeichnet, dass** die allgemeine Steuereinheit, die Klappensteuerkette und die Steuerkette des Fahrwerks von einer elektrischen Energiequelle gesteuert werden, wenn das Luftfahrzeug im Normalbetrieb, im Notbetrieb und in der Wartungsphase ist,
wobei die Klappenverriegelungsvorrichtung(en), das oder die Steuerorgan(e) (18) des Klappenbetätigungsorgans, die Haltevorrichtung(en) des Fahrwerks (13) und das oder die Steuerorgane (14) des Fahrwerk-Betätigungsorgans elektrisch gesteuert werden,
wobei die Verriegelungsvorrichtung der Klappe aus einem Verriegelungshaken besteht, der ausgehend von einem elektrischen Stellantrieb elektrisch gesteuert wird,
wobei die Haltevorrichtung des Fahrwerks aus einem Haltehaken des Fahrwerks besteht, der ausgehend von einem elektrischen Stellantrieb elektrisch gesteuert wird,
wobei die Steuerkette der Klappen und die Steuerkette des Fahrwerks je mit der allgemeinen Steuereinheit nur durch eine elektrische Verbindung verbunden und in der Lage sind, Steuerbefehle zu empfangen, die von der allgemeinen Steuereinheit gemäß einer vorbestimmten Abfolgesteuerung gesendet werden.

2. System nach Anspruch 1, **dadurch gekennzeichnet, dass** im Normalbetrieb die Energiequelle die allgemeine Stromversorgung des Luftfahrzeugs ist.

3. System nach einem der Ansprüche 1 bis 2, **dadurch gekennzeichnet, dass** im Notbetrieb die Energiequelle die allgemeine Stromversorgung des Luftfahrzeugs oder eine sekundäre Stromquelle des Luftfahrzeugs ist, die einen Propeller aufweist.

4. System nach einem der Ansprüche 1 bis 3, **dadurch gekennzeichnet, dass** in der Wartungsphase die Energiequelle eine Hilfsstromquelle am Boden ist.

5. System nach einem der Ansprüche 1 bis 4, **dadurch gekennzeichnet, dass** die Steuerkette der Klappen mindestens einen der Verriegelungsvorrichtung der Klappe zugeordneten elektrischen Stellantrieb und einen dem Steuerorgan des Betätigungsorgans der Klappe zugeordneten elektrischen Stellantrieb aufweist.

6. System nach einem der Ansprüche 1 bis 5, **dadurch gekennzeichnet, dass** die Steuerkette des Fahrwerks mindestens einen der Haltevorrichtung des Fahrwerks zugeordneten elektrischen Stellantrieb und einen dem Steuerorgan des Betätigungsorgans des Fahrwerks zugeordneten elektrischen Stellantrieb aufweist.

7. System nach einem der Ansprüche 1 bis 6, **dadurch gekennzeichnet, dass** die Steuerkette der Klappen ein außerhalb des Luftfahrzeugs angeordnetes elektrisches Steuerorgan (10) aufweist, das die Öffnung der Hauptklappe in der Wartungsphase steuert.

8. System nach einem der Ansprüche 1 bis 7, **dadurch gekennzeichnet, dass** die elektrische Verbindung zwischen der allgemeinen Steuereinheit und den Steuerketten der Klappen eine Drahtverbindung ist.

9. System nach einem der Ansprüche 1 bis 8, **dadurch gekennzeichnet, dass** die allgemeine Steuereinheit eine Abfolgesteuerung bei den Betätigungen der Klappenverriegelungs- und Haltevorrichtungen des Fahrwerks und in den Betätigungsorganen gewährleistet.

10. Luftfahrzeug, das ein einziehbares Fahrwerk aufweist, **dadurch gekennzeichnet, dass** es ein System zum Manövrieren des Fahrwerks nach einem der vorhergehenden Ansprüche aufweist.

## Claims

1. System for manoeuvring an aircraft landing gear which is articulated in a gear bay closed by a set of 5 doors, comprising:
- a general control unit for the gear bay to initiate the various manoeuvres,
- a control chain (16) for the doors, comprising at least one device (17) for locking the door, at least one member for actuating the door and a member (18) for controlling the actuating member,
- a control chain (15) for the landing gear, comprising at least one device (13) for holding the gear, at least one member for actuating the gear and a member (14) for controlling the actuating member,
**characterized in that** the general control unit, the door control chain and the control chain for the gear are controlled by a source of electrical energy during normal operation of the aircraft, during emergency operation and during maintenance,
said door locking device(s), said member(s) (18) for controlling the door actuating member, said device(s) (13) for holding the gear and said member(s) (14) for controlling the gear actuating member being controlled electrically,
said door locking device consisting of a locking hook that is controlled electrically from an electric actuator,
said device for holding the gear consists of a hook for holding the gear, controlled electrically from an electric actuator,
the control chain for the doors and the control chain for the landing gear each being connected to the general control unit only by an electric connection and being able to receive control commands sent by the general control unit according to a predetermined sequence.

2. System according to Claim 1, **characterized in that**, during normal operation, the energy source is the general electrical supply of the aircraft.

3. System according to either one of Claims 1 and 2, **characterized in that**, during emergency operation, the energy source is the general electrical supply of the aircraft or a secondary electrical source of the aircraft, comprising a turbine.

4. System according to any one of Claims 1 to 3, **characterized in that**, during maintenance, the energy source is a ground-based auxiliary electrical source.

5. System according to any one of Claims 1 to 4, **characterized in that** the control chain for the doors comprises at least one electric actuator connected to the device for locking the door and an electric actuator connected to the member for controlling the member for actuating the door.

6. System according to any one of Claims 1 to 5, **characterized in that** the control chain for the gear comprises at least one electric actuator connected to the device for holding the gear and an electric actuator connected to the member for controlling the member for actuating the gear.

7. System according to any one of Claims 1 to 6, **characterized in that** the control chain for the doors comprises an electric control member (10) which is located outside the aircraft and controls the opening of the main door during maintenance.

8. System according to any one of Claims 1 to 7, **characterized in that** the electric connection between the general control unit and the control chains for the doors and for the gear is a wired connection.

9. System according to any one of Claims 1 to 8, **characterized in that** the general control unit sequences the actuations of the devices for locking the doors and for holding the gear and sequences the actuation members.

10. Aircraft comprising a retractable landing gear, **characterized in that** it comprises a system for manoeuvring the landing gear according to any one of the preceding claims.
